# EUROPÄISCHE PATENTSCHRIFT

(11) **EP 2 567 471 B1**
(45) Veröffentlichungstag und Bekanntmachung des Hinweises auf die Patenterteilung: **03.12.2014**
(21) Anmeldenummer: 11720733.2
(22) Anmeldetag: 27.04.2011
(51) Int. Cl.: H04B 7/185

(54) **KOMMUNIKATIONSSYSTEM FÜR EIN LUFTFAHRZEUG**
COMMUNICATION SYSTEM FOR AN AIRCRAFT
SYSTÈME DE COMMUNICATION POUR UN AÉRONEF

(30) Priorität: 04.05.2010 DE 102010019394
(43) Veröffentlichungstag der Anmeldung: 13.03.2013
(73) Patentinhaber: Becker Avionics GmbH, 77836 Rheinmünster (DE)
(72) Erfinder: BOMMER, Otto, 76133 Karlsruhe (DE); FINDEISEN, Udo, 76547 Sinzheim (DE)
(74) Vertreter: Reule, Hanspeter
(86) Internationale Anmeldenummer: PCT/EP2011/056620
(87) Internationale Veröffentlichungsnummer: WO 2011/138198

(56) Entgegenhaltungen:
- US-A- 4 903 298
- US-A1- 2002 082 008
- US-A1- 2003 054 817
- US-A1- 2008 133 705
- US-A1- 2008 248 772
- US-A1- 2009 081 947

## Beschreibung

Die Erfindung betrifft ein Kommunikationssystem für ein Luftfahrzeug gemäß Oberbegriff des Anspruchs 1.

Solche Kommunikationssysteme (siehe US-A-2003/0054817, Goldberg et al.) ermöglichen einerseits die Kommunikation von Insassen eines Flugzeugs oder Hubschraubers mit einer Bodenstation oder einem anderen Luftfahrzeug und andererseits die Kommunikation mehrerer Insassen eines Luftfahrzeugs miteinander. Dabei ist jedem an der Kommunikation teilnehmenden Insassen des Luftfahrzeugs eine Bedieneinrichtung (Panel) zugeordnet, die Schalter, Tasten, Drehknöpfe und/oder andere Bedienelemente aufweist, die von der vor dem Panel sitzenden Bedienperson im Luftfahrzeug betätigt werden können. Bei bekannten Kommunikationssystemen sind die Panels mit einer zentralen Datenverarbeitungseinrichtung (Remote Unit) verbunden, die in einigem Abstand zum Panel im Luftfahrzeug angeordnet ist. Die Remote Unit ist mittels Datenleitungen mit Kommunikationsgeräten wie Sende- und Empfangsgeräten des Luftfahrzeugs verbunden, die über eine oder mehrere Antennen Kommunikationsdaten über Funk an Bodenstationen oder andere Luftfahrzeuge senden oder von diesen empfangen. Die Remote Unit ist mit den Panels über Datenleitungen verbunden, so dass beispielsweise über ein Empfangsgerät empfangene Daten in der Remote Unit ausgewertet und an die Panels weitergeleitet werden, wo sie von den Insassen des Luftfahrzeugs abgefragt werden können. Desweiteren können Daten von den Insassen über die Panels an die Remote Unit und von dieser an ein Sendegerät übermittelt werden. Schließlich können die Insassen des Luftfahrzeugs miteinander kommunizieren, indem sie beispielsweise Audiodaten über die Panels an die Remote Unit übermitteln, von der diese dann an die anderen Panels übermittelt werden. Somit werden Daten über Schnittstellen zwischen den Panels und der Remote Unit an die und von der Remote Unit übertragen.

Eine solche Kommunikationsarchitektur in einem Luftfahrzeug erfordert eine leistungsfähige Remote Unit, die daher teuer ist. Die Remote Unit muß hauptsächlich deshalb leistungsfähig sein, weil sie, um sie für verschiedene Luftfahrzeuge verwenden zu können, sowohl für den Einsatz mit nur einem Panel als auch für den Einsatz mit einer Vielzahl von Panels ausgelegt sein muß. Würde für jeden Luftfahrzeugtyp eine gesonderte Remote Unit entwickelt, würde dies die Kosten noch weiter in die Höhe treiben. Derzeit ist es üblich, die Remote Unit so auszulegen, dass sie mit bis zu sechs Panels verwendet werden kann. Dies bedeutet auch, dass schon ein Luftfahrzeug, das sieben oder acht Panels aufweist, bereits mit zwei Remote Units oder einer teureren Spezialvariante ausgerüstet sein muß.

Es ist daher Aufgabe der Erfindung, ein Kommunikationssystem für ein Luftfahrzeug der eingangs genannten Art derart weiterzubilden, dass es kostengünstiger ist.

Die Aufgabe wird erfindungsgemäß durch ein Kommunikationssystem mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, dass jeder Bedieneinrichtung bzw. jedem Panel eine eigene Datenverarbeitungseinrichtung direkt zugeordnet wird. Dies wird dadurch erzielt, dass die Datenverarbeitungseinrichtung und die Bedieneinrichtung in unmittelbarer Nähe zueinander angeordnet und mechanisch miteinander zu einer Baueinheit verbunden sind. Für Wartungs- und Reparaturzwecke ist es von Vorteil, wenn die Datenverarbeitungseinrichtung und die Bedieneinrichtung lösbar miteinander verbunden sind, so dass sie zum Austauschen leicht getrennt werden können. Zu diesem Zweck sind die elektrischen Komponenten der Bedieneinrichtung mit den elektrischen Komponenten der Datenverarbeitungseinrichtung zweckmäßig mittels einer Steckverbindung verbunden. Dadurch wird ohne weiteres Zutun der Bedienperson eine elektrische Verbindung zwischen beiden Einrichtungen hergestellt, sobald diese miteinander verbunden werden. Durch die Standardisierung der Verbindung zwischen Bedien- und Datenverarbeitungseinrichtung lassen sich unterschiedliche Anforderungen an die Bedienung im Gesamtsystem und in unterschiedlichen Luftfahrzeugen abbilden.

Gemäß einem bevorzugten Ausführungsbeispiel weist das erfindungsgemäße Kommunikationssystem mehrere Bedieneinrichtungen und mehrere Datenverarbeitungseinrichtungen auf, wobei die Zahl der Datenverarbeitungseinrichtungen mindestens so groß ist wie die Zahl der Bedieneinrichtungen. Dabei ist mit jeder Bedieneinrichtung eine mittels der Bedieneinrichtung bedienbare Datenverarbeitungseinrichtung mechanisch zu einer Baueinheit verbunden. Ein solches Kommunikationssystem ist insbesondere für Luftfahrzeuge geeignet, in denen mehrere Insassen miteinander oder mit Stellen außerhalb des Luftfahrzeugs, wie Bodenstationen oder anderen Luftfahrzeugen, kommunizieren müssen. An jedem Arbeitsplatz einer Bedienperson befindet sich dann eine solche Baueinheit. Wenn alle Baueinheiten identisch sind, können diese standardmäßig für verschiedene Typen von Luftfahrzeugen bereitgestellt werden, so dass an jedem Arbeitsplatz einer Bedienerson eine solche Baueinheit eingebaut werden kann. Damit kann das Kommunikationssystem individuell an jedes Luftfahrzeug angepasst werden, im Gegensatz zu den herkömmlichen Systemen, bei denen eine Remote Unit mit mehreren Panels verbunden ist.

Vorteilhafterweise sind alle aus einer Datenverarbeitungseinrichtung und einer Bedieneinrichtung bestehende Baueinheiten baugleich. Falls an unterschiedlichen Arbeitsplätzen im Luftfahrzeug unterschiedliche Bedieneinrichtungen bzw. Panels erforderlich sind, ist es auch möglich, diese so auszubilden, dass sie mit identischen Datenverarbeitungseinrichtungen zu einer Baueinheit verbunden werden können. Die Datenverarbeitungseinrichtung ist dann ein Standardteil, das in einer Vielzahl von Luftfahrzeugen an allen Arbeitsplätzen eingebaut werden kann. Dabei wird bevorzugt, dass die die Datenverarbeitungseinrichtungen mit den Bedieneinrichtungen verbindenden Steckverbindungen baugleich als Standardsteckverbindungen ausgebildet sind.

Gemäß einer vorteilhaften Weiterbildung der Erfindung ist mindestens eine der Bedieneinrichtungen über die mit ihr verbundene Datenverarbeitungseinrichtung mittels der Datenübertragungseinrichtung (Datenbus) mit einer weiteren, durch sie bedienbaren Datenverarbeitungseinrichtung verbunden. Durch diese Maßnahme kann die Bedieneinrichtung so ausgestaltet werden, dass sie beispielsweise mehr Radiofunktionen aufweisen kann als eine Datenverarbeitungseinrichtung. Die Funktionen der Bedieneinrichtung, für die die mit ihr verbundene Datenübertragungseinrichtung nicht ausgelegt ist, können dann von der weiteren Datenverarbeitungseinrichtung wahrgenommen werden. Vorteilhaft sind alle Datenverarbeitungseinrichtungen miteinander durch die Datenübertragungseinrichtung bzw. den Datenbus miteinander verbunden.

Die Übertragung von Audiodaten in einem erfindungsgemäßen Kommunikationssystem zwischen zwei Datenverarbeitungseinrichtungen oder zwischen einer Datenverarbeitungseinrichtung und einem Sender oder Empfänger erfolgt vorzugsweise über zwei getrennte Datenleitungen. Dabei wird eine die Audiodaten charakterisierende Signalfolge, die in der Regel eine Überlagerung mehrerer Sinusschwingungen enthält, mit einer Abtastrate abgetastet und in mindestens eine erste und eine zweite Teilsignalfolge zerlegt. Die beim Abtasten ermittelten Signalwerte werden abwechselnd den Teilsignalfolgen zugeordnet, welche dann über getrennte Datenleitungen übermittelt werden. Nach der Übermittlung werden die Signalwerte der Teilsignalfolgen wieder in ihrer ursprünglichen zeitlichen Reihenfolge zusammengesetzt und bilden das Ausgangssignal. Durch diese Maßnahme wird eine erhöhte Sicherheit bei der Kommunikation geschaffen. Fällt bei einem herkömmlichen Kommunikationssystem eine Datenleitung aus, so kann zwischen den Bauteilen, die durch die Datenleitung verbunden sind, kein Signal übertragen werden. Wird das Signal in zwei oder mehr Teilsignale aufgeteilt und werden diese Teilsignale über getrennte Datenleitungen übertragen, so ist das Audiosignal meist auch dann noch verständlich, wenn eine Datenleitung unterbrochen wird und das über sie übertragene Teilsignal verloren geht. Dabei wird bevorzugt, dass die Abtastrate mindestens doppelt so groß ist wie die Frequenz der in der die Audiodaten charakterisierenden Signalfolge enthaltenen mindestens einen Sinusschwingung.

Im Folgenden wird die Erfindung anhand der in der Zeichnung in schematischer Weise dargestellten Ausführungsbeispiele näher erläutert. Es zeigen
- Fig. 1: ein Kommunikationssystem in schematischer Darstellung gemäß einem ersten Ausführungsbeispiel;
- Fig. 2a, 2b: eine aus einer Bedieneinrichtung und einer Datenverarbeitungseinrichtung bestehende Baueinheit im getrennten und zusammengebauten Zustand und
- Fig. 3: ein Kommunikationssystem gemäß einem zweiten Ausführungsbeispiel in schematischer Darstellung.

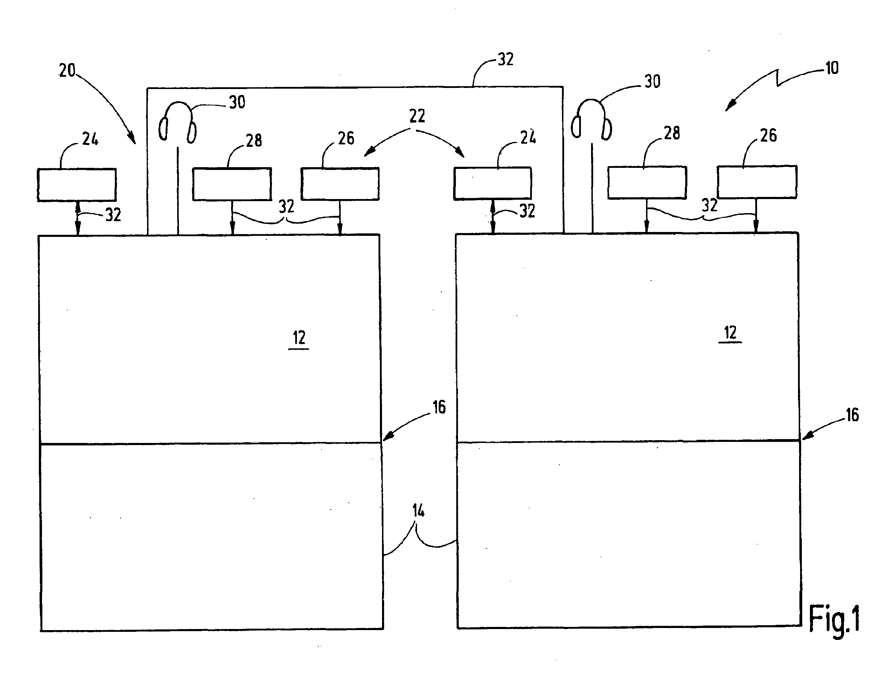

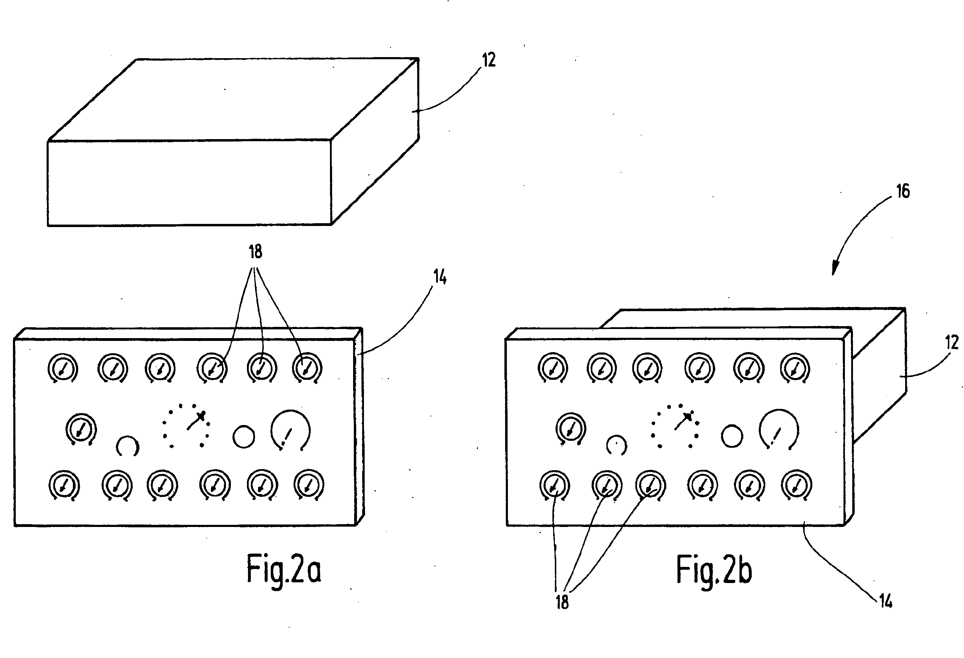

Das in Fig. 1 gezeigte Kommunikationssystem 10 eines Luftfahrzeugs weist an zwei Arbeitsplätzen für Bedienpersonal jeweils eine aus einer Datenverarbeitungseinrichtung 12 und einer Bedieneinrichtung 14 zusammengesetzte Baueinheit 16 auf (Fig. 2). Jede der Bedieneinrichtungen 14 weist eine Vielzahl von Schaltern und Drehknöpfen 18 auf, mit der die Bedienperson das Kommunikationssystem 10 bedienen kann. Jede Bedieneinrichtung 14 ist mit einer der Datenverarbeitungseinrichtungen 12 mechanisch fest, aber lösbar verbunden. Eine Verbindung zwischen elektrischen Komponenten der Bedieneinrichtung 14 und elektrischen Komponenten der Datenverarbeitungseinrichtung 12 erfolgt mittels standardisierter Steckverbindungen.

Jede der Datenverarbeitungseinrichtungen 12 ist über eine mehrere Datenleitungen aufweisende Datenübertragungseinrichtung 20 mit einer Sende- und Empfangseinrichtung 22 verbunden. Letztere weist im hier gezeigten Ausführungsbeispiel drei Sende- und Empfangsgeräte (Transceiver) 24, drei Empfangsgeräte (Receiver) wie beispielsweise Navigationsempfänger 26 und drei sogenannte feste Empfangsgeräte 28 auf, wobei Letztere nicht ausgeschaltet werden können und dem Empfang von Warnsignalen dienen. Die Sende- bzw. Empfangsgeräte 24, 26, 28 senden und empfangen Daten an bzw. von externen Empfangs- und Sendegeräten über mindestens eine Antenne. An jede der Datenverarbeitungseinrichtungen 12 ist direkt oder über die zugehörige Bedieneinrichtung 14 ein Kopfhörer 30 angeschlossen, mit dem die jeweilige Bedienperson Audiodaten von der Datenverarbeitungseinrichtung 12 übermittelt bekommt sowie mittels eines integrierten Mikrofons Audiodaten an die Datenverarbeitungseinrichtung 12 übermittelt. Die Datenübertragungseinrichtung 20 weist zudem einen Audiodatenbus auf, mit dem die beiden Datenverarbeitungseinrichtungen 12 zum Austausch von Audiodaten miteinander verbunden sind. Der Anschaulichkeit halber ist in Fig. 1 jeder Datenverarbeitungseinrichtung 12 eine aus drei Transceivern 24, drei Receivern 26 und drei festen Empfangsgeräten 28 bestehende Sende- und Empfangseinrichtung 22 zugeordnet. In aller Regel wird ein Luftfahrzeug jedoch nur mit einer Sende- und Empfangseinrichtung 22 ausgestattet, deren Bestandteile dann über Datenleitungen mit jeder der Datenverarbeitungseinrichtungen 12 verbunden ist.

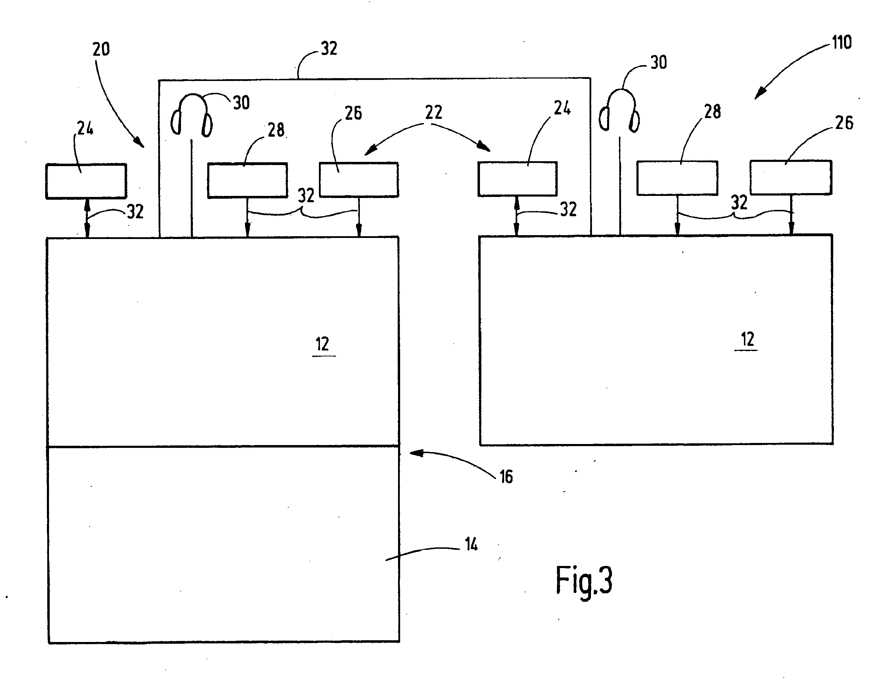

Das Kommunikationssystem 110 gemäß dem zweiten Ausführungsbeispiel (Fig. 3) unterscheidet sich vom Kommunikationssystem 10 gemäß dem ersten Ausführungsbeispiel lediglich darin, dass eine der Datenverarbeitungseinrichtungen 12 nicht mit einer Bedieneinrichtung 14 verbunden ist. Das Kommunikationssystem 110 ist somit für ein Luftfahrzeug mit nur einem Platz für eine Bedienperson vorgesehen. Gleiche Bauteile sind daher mit gleichen Bezugszeichen versehen wie beim ersten Ausführungsbeispiel.

Auch das Kommunikationssystem 110 weist eine Baueinheit 16 auf, die aus einer Datenverarbeitungseinrichtung 12 und einer Bedieneinrichtung 14 zusammengesetzt ist, welche mechanisch miteinander fest, aber lösbar verbunden sind. Die Baueinheit 16 ist am Arbeitsplatz der Bedienperson im Luftfahrzeug eingebaut. Während die Bedieneinrichtungen 14 des ersten Ausführungsbeispiels dafür vorgesehen waren, jeweils drei Sende- und Empfangsgeräte 24, Empfangsgeräte 26 und feste Empfänger 28 zu bedienen, ist die Bedieneinrichtung 14 gemäß dem zweiten Ausführungsbeispiel dafür vorgesehen, sechs Sende- und Empfangsgeräte 24, sechs Empfangsgeräte 26 und sechs feste Empfänger 28 zu bedienen. Für eine solche Anzahl an Geräten ist die identisch mit dem ersten Ausführungsbeispiel ausgebildete Datenverarbeitungseinrichtung 12 nicht ausgelegt. Aus diesem Grund ist die weitere Datenverarbeitungseinrichtung 12 vorgesehen, und die beiden Datenverarbeitungseinrichtungen 12 sind mittels einer zur Datenübertragungseinrichtung 20 gehörenden Datenleitung 32 miteinander verbunden. Die Bedieneinrichtung 14 bedient somit über die beiden Datenverarbeitungseinrichtungen 12, von denen eine fest mit ihr verbunden ist, zwei Sende- und Empfangseinrichtungen 22, die jeweils aus neun Geräten bestehen. Zudem ist mit jeder Datenverarbeitungseinrichtung 12 ein Kopfhörer 30 verbunden, mit dem jeweils eine Bedienperson empfangene Audiodaten abhören kann und mittels eines Mikrofons selbst Audiodaten zur Weiterleitung an die Datenverarbeitungseinrichtungen 12 übermitteln kann. Somit weist das Kommunikationssystem 110 zwar nur einen Platz für eine Bedienperson auf, es ist jedoch ein weiterer Platz für einen Luftfahrzeuginsassen vorgesehen, der zumindest die Audiodaten übermittelt bekommt und z. B. den Funkverkehr mithören kann.

Die Datenübertragungseinrichtung 20 weist als Datenleitungen Zweidrahtleitungen 32 auf, die zumindest dort, wo Audiodaten übertragen werden, doppelt vorhanden sind. Jeder Audiodatensatz, der durch eine Signalfolge charakterisiert wird, wird typischerweise mit einer Abtastrate von 22,05 oder 44,1 kHz abgetastet, welche höher ist als die für die Wiedergabe der Audiodaten erforderliche höchste Schwingungsfrequenz. Die zu den Abtastzeitpunkten ermittelten Signalwerte werden abwechselnd über die beiden parallelen Zweidrahtleitungen 32 übermittelt und nach ihrer Übermittlung in ihrer ursprünglichen zeitlichen Reihenfolge zu einem Ausgangssignal zusammengesetzt. Dadurch wird die Kommunikation im Luftfahrzeug auch dann möglich, wenn eine der beiden parallel verlaufenden Zweidrahtleitungen 32 ausfällt, da die über die intakte Zweidrahtleitung 32 übermittelte Teilsignalfolge in der Regel ausreichend ist, um die Audiodaten zu verstehen.

In den gezeigten Ausführungsbeispielen ist das Kommunikationssystem 10, 110 für eine oder zwei Bedienpersonen ausgelegt. Es versteht sich von selbst, dass das Kommunikationssystem 10,110 auf einfache Art und Weise für mehr Bedienpersonen ausgelegt werden kann, indem für jede Bedienperson eine Baueinheit 16 bereitgestellt wird.

Zusammenfassend ist folgendes festzuhalten:

Die Erfindung betrifft ein Kommunikationssystem 10, 110 für ein Luftfahrzeug mit einer mindestens einen Sender 24, mindestens einen Empfänger 26, 28 und mindestens eine Antenne aufweisenden Sende- und Empfangseinrichtung 22, mit mindestens einer mit der Sende- und Empfangseinrichtung 22 mittels einer Datenübertragungseinrichtung 20 verbundenen Datenverarbeitungseinrichtung 12 und mit mindestens einer mit der mindestens einen Datenverarbeitungseinrichtung 12 verbundenen, manuell betätigbare Schalter, Tasten und/oder Drehknöpfe 18 aufweisenden Bedieneinrichtung 14 zur Eingabe von Daten in die mindestens eine Datenverarbeitungseinrichtung 12. Erfindungsgemäß ist vorgesehen, dass die mindestens eine Bedieneinrichtung 14 mit der mindestens einen Datenverarbeitungseinrichtung 12 mechanisch zu einer Baueinheit 16 verbunden ist.

## Patentansprüche

1. Kommunikationssystem für ein Luftfahrzeug mit einer mindestens einen Sender (24), mindestens einen Empfänger (26, 28) und mindestens eine Antenne aufweisenden Sende- und Empfangseinrichtung (22), mit mindestens einer mit der Sende- und Empfangseinrichtung (22) mittels einer Datenübertragungseinrichtung (20) zur Übertragung von Audiodaten verbundenen Datenverarbeitungseinrichtung (12) und mit mindestens einer mit der mindestens einen Datenverarbeitungseinrichtung (12) verbundenen, manuell betätigbare Schalter, Tasten und/oder Drehknöpfe (18) aufweisenden Bedieneinrichtung (14) zur Eingabe von Daten in die mindestens eine Datenverarbeitungseinrichtung (12), **dadurch gekennzeichnet, dass** die mindestens eine Bedieneinrichtung (14) mit der mindestens einen Datenverarbeitungseinrichtung (12) mechanisch und lösbar zu einer Baueinheit (16) verbunden ist und dass elektrische Komponenten der mindestens einen Bedieneinrichtung (14) mit elektrischen Komponenten der mindestens einen Datenverarbeitungseinrichtung (12) über eine elektrische Steckverbindung verbunden sind.

2. Kommunikationssystem nach Anspruch 1, **gekennzeichnet durch** mehrere Bedieneinrichtungen (14) und mehrere Datenverarbeitungseinrichtungen (12), wobei die Zahl der Datenverarbeitungseinrichtungen (12) mindestens so groß ist wie die Zahl der Bedieneinrichtungen (14), und wobei mit jeder Bedieneinrichtung (14) eine mittels der Bedieneinrichtung (14) bedienbare Datenverarbeitungseinrichtung (12) mechanisch zu einer Baueinheit (16) verbunden ist.

3. Kommunikationssystem nach Anspruch 2, **dadurch gekennzeichnet, dass** alle Datenverarbeitungseinrichtungen (12) baugleich sind.

4. Kommunikationssystem nach Anspruch 3, **dadurch gekennzeichnet, dass** die elektrischen Steckverbindungen baugleich als Standardsteckverbindungen ausgebildet sind.

5. Kommunikationssystem nach einem der Ansprüche 2 bis 4, **dadurch gekennzeichnet, dass** mindestens eine der Bedieneinrichtungen (14) über die mit ihr verbundene Datenverarbeitungseinrichtung (12) mittels der Datenübertragungseinrichtung (20) mit einer weiteren, durch sie bedienbaren Datenverarbeitungseinrichtung (12) verbunden ist.

6. Kommunikationssystem nach einem der Ansprüche 2 bis 5, **dadurch gekennzeichnet, dass** alle Datenverarbeitungseinrichtungen (12) miteinander durch die Datenübertragungseinrichtung (20) verbunden sind.

7. Kommunikationssystem nach Anspruch 6, **dadurch gekennzeichnet, dass** mittels der Datenübertragungseinrichtung (20) Audiodaten zwischen den Datenverarbeitungseinrichtungen (12) übermittelbar sind.

8. Kommunikationssystem nach einem der Ansprüche 2 bis 7, **dadurch gekennzeichnet, dass** mindestens eine der und vorzugsweise jede der Datenverarbeitungseinrichtungen (12) mittels jeweils einer analogen Zweidrahtleitung (32) mit mindestens einem Sender (24) und mindestens einem Empfänger (26, 28) verbunden ist.

9. Verfahren zur Übertragung von Audiodaten zwischen zwei Datenverarbeitungseinrichtungen (12) und/oder zwischen einer Datenverarbeitungseinrichtung (12) und einem Sender (24) oder Empfänger (26, 28) in einem Kommunikationssystem (10, 110) nach einem der vorangehenden Ansprüche, wobei eine die Audiodaten charakterisierende Signalfolge mit einer Abtastrate abgetastet und in mindestens eine erste und eine zweite Teilsignalfolge zerlegt wird, wobei die beim Abtasten ermittelten Signalwerte alternierend den Teilsignalfolgen zugeordnet werden, wobei die Teilsignalfolgen über getrennte Datenleitungen (32) übermittelt werden und wobei nach der Übermittlung die Signalwerte der Teilsignalfolgen wieder in ihrer ursprünglichen zeitlichen Reihenfolge zu einem Ausgangssignal zusammengesetzt werden.

10. Verfahren nach Anspruch 9, **dadurch gekennzeichnet, dass** die die Audiodaten charakterisierende Signalfolge mindestens eine Sinusschwingung enthält und dass die Abtastrate mindestens doppelt so groß ist wie die Frequenz der mindestens einen Sinusschwingung.

## Claims

1. Communications system for an aircraft, having a transmission and reception device (22) having at least one transmitter (24), at least one receiver (26, 28), and at least one antenna, having at least one data processing device (12) connected with the transmission and reception device (22) by means of a data transmission device (20) for transmission of audio data, and having at least one operating device (14) having manually activated switches, buttons and/or knobs (18), connected with the at least one data processing device (12), for input of data into the at least one data processing device (12), **characterized in that** the at least one operating device (14) is mechanically and releasably connected with the at least one data processing device (12), to form a modular unit (16) and that electrical components of the at least one operating device (14) are connected with electrical components of the at least one data processing device (12) by means of an electrical plug-in connection.

2. Communications system according to claim 1, **characterized by** multiple operating devices (14) and multiple data processing devices (12), wherein the number of data processing devices (12) is at least as great as the number of operating devices (14), and wherein a data processing device (12) that can be operated by means of the operating device (14) is mechanically connected with each operating device (14), to form a modular unit (16).

3. Communications system according to claim 2, **characterized in that** all the data processing devices (12) have the same construction.

4. Communications system according to claim 3, **characterized in that** the electrical plug-in connections are configured with the same construction, as standard plug-in connections.

5. Communications system according to one of claims 2 to 4, **characterized in that** at least one of the operating devices (14) is connected, by way of the data processing device (12) that is connected with it, with a further data processing device (12) that can be operated by it, by means of the data transmission device (20).

6. Communications system according to one of claims 2 to 5, **characterized in that** all the data processing devices (12) are connected with one another by means of the data transmission device (20).

7. Communications system according to claim 6, **characterized in that** audio data can be transmitted between the data processing devices (12), by means of the data transmission device (20).

8. Communications system according to one of claims 2 to 7, **characterized in that** at least one of the and preferably each of the data processing devices (12) is connected with at least one transmitter (24) and at least one receiver (26, 28), by means of an analog two-wire line (32), in each instance.

9. Method for transmission of audio data between two data processing devices (12) and/or between a data processing device (12) and a transmitter (24) or receiver (26, 28), in a communications system (10, 110) according to one of the preceding claims, wherein a signal sequence that characterizes the audio data is sampled with a sampling rate and split up into at least a first and a second partial signal sequence, wherein the signal values determined during sampling are alternately assigned to the partial signal sequences, wherein the partial signal sequences are transmitted by way of separate data lines (32), and wherein after the transmission, the signal values of the partial signal sequences are combined again to produce their original temporal sequence, to form an output signal.

10. Method according to claim 9, **characterized in that** the signal sequence that characterizes the audio data contains at least one sine oscillation and that the sampling rate is at least twice as great as the frequency of the at least one sine oscillation.

## Revendications

1. Système de communication pour un aéronef, comprenant un dispositif d'émission et de réception (22) présentant au moins un émetteur (24), au moins un récepteur (26, 28) et au moins une antenne, comprenant au moins un dispositif de traitement de données (12) relié au dispositif d'émission et de réception (22) au moyen d'un dispositif de transmission de données (20) pour la transmission de données audio et comprenant au moins un dispositif de commande (14) relié audit au moins un dispositif de traitement de données (12), présentant des commutateurs, des touches et/ou des boutons rotatifs (18) actionnables manuellement pour l'entrée de données dans ledit au moins un dispositif de traitement de données (12), **caractérisé en ce que** ledit au moins un dispositif de commande (14) est relié mécaniquement et de manière détachable audit au moins un dispositif de traitement de données (12) pour former une unité modulaire (16) et **en ce que** des composants électriques dudit au moins un dispositif de commande (14) sont reliés à des composants électriques dudit au moins un dispositif de traitement de données (12) par une connexion électrique enfichable.

2. Système de communication selon la revendication 1, **caractérisé par** plusieurs dispositifs de commande (14) et plusieurs dispositifs de traitement de données (12), le nombre de dispositifs de traitement de données (12) étant au moins aussi grand que le nombre de dispositifs de commande (14), et un dispositif de traitement de données (12) pouvant être commandé au moyen du dispositif de commande (14) étant relié mécaniquement à chaque dispositif de commande (14) pour former une unité modulaire (16).

3. Système de communication selon la revendication 2, **caractérisé en ce que** tous les dispositifs de traitement de données (12) sont de construction identique.

4. Système de communication selon la revendication 3, **caractérisé en ce que** les connexions électriques enfichables sont réalisées de façon identique sous la forme de connexions enfichables standard.

5. Système de communication selon l'une des revendications 2 à 4, **caractérisé en ce qu'**au moins un des dispositifs de commande (14) est relié, par l'intermédiaire du dispositif de traitement de données (12) auquel il est relié, au moyen du dispositif de transmission de données (20), à un autre dispositif de traitement de données (12) qui peut être commandé par lui.

6. Système de communication selon l'une des revendications 2 à 5, **caractérisé en ce que** tous les dispositifs de traitement de données (12) sont reliés entre eux par le dispositif de transmission de données (20).

7. Système de communication selon la revendication 6, **caractérisé en ce que** le dispositif de transmission de données (20) permet la transmission de données audio entre les dispositifs de traitement de données (12).

8. Système de communication selon l'une des revendications 2 à 7, **caractérisé en ce qu'**au moins un, de préférence chacun des dispositifs de traitement de données (12) est relié à au moins un émetteur (24) et au moins un récepteur (26, 28) au moyen chaque fois d'une ligne bifilaire analogique (32).

9. Procédé de transmission de données audio entre deux dispositifs de traitement de données (12) et/ou entre un dispositif de traitement de données (12) et un émetteur (24) ou un récepteur (26, 28) dans un système de communication (10, 110) selon l'une des revendications précédentes, dans lequel une séquence de signaux caractérisant les données audio est échantillonnée à une fréquence d'échantillonnage et décomposée en au moins une première et une deuxième séquence de signaux partielle, les valeurs de signal déterminées lors de l'échantillonnage étant affectées alternativement aux séquences de signaux partielles, les séquences de signaux partielles étant transmises via des lignes de données (32) séparées et, après la transmission, les valeurs de signal des séquences de signaux partielles étant recomposées en un signal de sortie dans leur séquence temporelle initiale.

10. Procédé selon la revendication 9, **caractérisé en ce que** la séquence de signaux caractérisant les données audio contient au moins une oscillation sinusoïdale et **en ce que** la fréquence d'échantillonnage est au moins deux fois plus élevée que la fréquence de ladite au moins une oscillation sinusoïdale.
